# EUROPÄISCHE PATENTSCHRIFT

(11) **EP 2 527 763 B1**
(45) Veröffentlichungstag und Bekanntmachung des Hinweises auf die Patenterteilung: **14.11.2018**
(21) Anmeldenummer: 12169286.7
(22) Anmeldetag: 24.05.2012
(51) Int. Cl.: F24S 25/20, F24S 25/35, F24S 25/632, F24S 25/634, F24S 40/44, E04D 13/18

(54) **Verkleidungssystem zur Verkleidung einer Gebäudeaussenfläche**
Cladding system for cladding the external surface of a building
Système d'habillage destiné à l'habillage d'une surface extérieure d'un bâtiment

(30) Priorität: 27.05.2011 CH 9142011
(43) Veröffentlichungstag der Anmeldung: 28.11.2012
(73) Patentinhaber: Gisler, Markus, 4704 Niederbipp (CH)
(72) Erfinder: Gisler, Markus, 4704 Niederbipp (CH); Wiget, Martin, 4704 Niederbipp (CH)
(74) Vertreter: Rentsch Partner AG

(56) Entgegenhaltungen:
- EP-A2- 1 070 923
- WO-A1-2007/045695
- DE-U1- 9 310 063
- DE-U1-202008 007 792
- DE-U1-202009 008 931
- DE-U1-202011 001 320
- GB-A- 2 463 556
- JP-A- 9 088 280
- JP-A- 11 222 991
- JP-A- H11 131 736
- JP-A- 2000 345 674
- JP-A- 2001 081 919
- US-B1- 6 414 237

## Beschreibung

### TECHNISCHES GEBIET

Die Erfindung betrifft ein Verkleidungssystem zur Verkleidung einer Gebäudeaussenfläche, insbesondere eines Schrägdaches oder einer Fassade, mit einer Mehrzahl überlappender Bauelemente, umfassend mindestens ein Bauelement und mindestens zwei Tragelemente zur lösbaren Fixierung des mindestens einen Bauelements auf einer Unterkonstruktion, wobei das Bauelement einen Rahmen umfasst, welcher Rahmen ein oberes Profil, ein unteres Profil und zwei seitliche Profile aufweist. Weiter betrifft die Erfindung die Verkleidung einer Gebäudeaussenfläche.

### STAND DER TECHNIK

Sollen Dächer oder Fassaden von Gebäuden mit Photovoltaik-Modulen ausgerüstet werden, so können diese auf eine bestehende Fassade bzw. ein bestehendes Dach aufgesetzt werden, d.h. sie werden mit einer geeigneten, meist komplizierten Montagekonstruktion auf der Fassade oder der Dachhaut montiert. Die bestehende Dachhaut, beispielsweise ein Ziegeldach, kann weiter genutzt werden und die Photovoltaik-Module müssen keine Dichtungsfunktion übernehmen. Jedoch muss der Montageaufbau jeweils individuell auf ein bestimmtes Dach angepasst werden. Kostenmässig ist diese Methode vor allem bei bestehenden Dächern und Fassaden sinnvoll.
Alternativ können entsprechend ausgebildete Photovoltaik-Module selber die dichte Verkleidung des Dachs bzw. der Fassade bilden. Diese Möglichkeit ist vor allem bei neuen Gebäuden oder bei grösseren Renovationen vorteilhaft, da die Kosten für die Deckung des Dachs teilweise eingespart und so die gesamten Baukosten gesenkt werden können. Ein weiterer Vorteil einer solchen Lösung ist ein gleichmässigeres optisches Aussehen, und damit eine ästhetisch ansprechende Wirkung.

FR 2465315 zeigt ein Photovoltaik-Modul, das in einem Profilrahmen aus Metall eingepasst ist, so dass sich ein plattenförmiges Photovoltaik-Bauelement ergibt. Das Photovoltaik-Modul ist in einer umlaufenden Profilnut des Rahmens dichtend gehalten. Der Profilrahmen ist derart ausgestaltet, dass die Bauelemente wie Ziegel schuppenförmig überlappend verlegt werden können. Die Profilrahmen benachbarter Bauelemente greifen ineinander, so dass sich eine regensichere Dachhaut ergibt. Die Photovoltaik-Bauelemente werden wie herkömmliche Ziegel mit Klammern auf den Dachlatten befestigt. Der Aufbau als kleinformatige Ziegel ist für den Einsatz als Photovoltaik-Modul aus elektrotechnischen Gründen nachteilig.

EP 1060520 zeigt ein Photovoltaik-Bauelement, welches von den Dimensionen her herkömmlichen Photovoltaik-Modulen entspricht, und demnach wesentlich grösser ist als herkömmliche Ziegel. Das gezeigte Photovoltaik-Bauelement weist seitlich einen Profilrahmen auf, der in den Profilrahmen des benachbarten Bauelements greift, und so eine regendichte Verbindung schafft. Das oben liegende Profil weist eine waagrecht liegende Abflussrinne auf, sowie Mittel zur Befestigung des Bauelements auf der Dachkonstruktion. Auf der unten liegenden Seite ist das Profil so ausgestaltet, dass es das Photovoltaik-Modul lediglich stützt, aber nicht auf der das Licht empfangenden Oberseite abdeckt.

EP 1703037 zeigt ein Photovoltaik-Bauelement, bei welchem auf der dem Gebäude zugewandten Seite des Bauelements Abstützvorrichtungen angeordnet sind, welche mit Tragelementen zusammenwirken, die auf einer Unterkonstruktion, beispielsweise den Dachlatten, befestigt werden.

Eine Bauweise mit seitlichen Rahmenprofilen, die ineinander greifen, hat den Vorteil, dass in Fallrichtung das unten liegende Profil eine Abflussrinne bildet, durch die das Regenwasser abfliessen kann. Jedoch hat diese Bauweise den Nachteil, dass das Verlegen der einzelnen Bauelemente zwingend in einer bestimmten waagrechten und senkrechten Reihenfolge erfolgen muss. Bei der Wartung beziehungsweise der Reparatur von einzelnen Bauelementen kann dies zu Problemen führen.

EP 1362967 zeigt ein System, bei welchem jeweils zwischen zwei Reihen nebeneinander liegender Bauelemente in Fallrichtung eine durchgehende, nach oben offene Profilschiene angeordnet ist. Die seitlichen Rahmenprofile greifen in diese Profilschiene ein, so dass sich in Fallrichtung eine durchgehende Abflussrinne und gleichzeitig eine regendichte seitliche Verbindung zwischen den Bauelementen bildet. Einzelne Bauelemente sind so zugänglich, ohne dass die seitlich benachbarten Bauelemente tangiert werden.

Alle oben genannten Verkleidungs-Systeme weisen den Nachteil auf, dass die Bauelemente von unten nach oben verlegt werden müssen, um die notwendige Überlappung der einzelnen Bauelemente herstellen zu können. Bei einem Dach muss also von der Traufe zum First hin gedeckt werden. Zudem sind, im Gegensatz zu kleinformatigen, robusten Ziegeln, die grossformatigen Photovoltaik-Module schwer und nicht begehbar. Für einen Monteur ist die Verlegung solcher Bauelemente deshalb auch bei eher flachen Dächern sehr umständlich und mühsam. Vor allem bei grösseren Photovoltaik-Bauelementen können für die Montage sogar zwei Personen notwendig sein, was die Montagekosten erhöht.

Aus EP 2196594, deren Inhalt hiermit als integraler Bestandteil dieser Beschreibung gelten soll, ist eine Verkleidungssystem bekannt, bei welchem die Bauelemente von oben, vom First her, nach unten Richtung Traufe montiert werden können, wobei bereits montierte Bauelemente nicht gelöst, verschoben oder angehoben werden müssen. Der Rahmen des Bauelements weist ein oberes und unteres Profil auf, wobei die beiden Profile mehrere Dichtlippen aufweisen, welche im eingebauten Zustand der Bauelemente eine Labyrinthdichtung zwischen zwei benachbarten Bauelementen ausbilden. Die Bauelemente werden durch Tragelemente gehalten, welche in bestimmten Abständen auf der Unterkonstruktion befestigt werden. Zwischen zwei seitlich benachbarten Bauelemente wird ein Abflusskanal angebracht.

JP 2000345674 offenbart ein System zur Deckung eines Schrägdaches mit Solarpaneelen. In Falllinie sind auf der Dachstruktur mehrere parallele Installationsschienen 21 zur lösbaren Fixierung der Paneele angeordnet. In einer Ausführungsform weisen die Paneele auf jeder Seite an einem oberen und unteren Ende je einen vorstehenden Verbindungsbolzen 35, 36 auf. Diese Verbindungsbolzen weisen zueinander einen bestimmten Abstand auf. Die Installationsschienen weisen pro Paneel jeweils zwei nach oben offene, benachbarte Verbindungsschlitze 23, 24 auf. Die zwei benachbarten Verbindungsschlitze 23, 24 haben den gleichen Abstand wie die zwei Verbindungsbolzen 35, 36 eines Paneels. Bei der Montage werden die Paneele lösbar zwischen zwei parallelen Installationsschienen befestigt, indem die Verbindungsbolzen 35, 36 des Paneels in die entsprechenden benachbarten Verbindungsschlitze 23, 24 der zwei Installationsschienen eingehängt werden. In einer alternativen Ausführungsform weisen die Paneele auf jeder Seite an einem oberen und unteren Ende je einen nach unten offenen Verbindungsschlitz 135, 136 auf. Diese Verbindungsschlitze weisen zueinander einen bestimmten Abstand auf. Die Installationsschienen weisen pro Paneel jeweils zwei benachbarte Verbindungsbolzen 123, 124 auf. Die zwei benachbarten Verbindungsbolzen 123, 124 haben den gleichen Abstand wie die zwei Verbindungsschlitze 135, 136 eines Paneels. Bei der Montage werden die Paneele lösbar zwischen zwei parallelen Installationsschienen befestigt, indem jedes Paneel mit den zwei Verbindungsschlitzen auf die die entsprechenden benachbarten Verbindungsbolzen der zwei Installationsschienen eingehängt wird. Beim Aufbau der Dachverkleidung werden die Paneele von unten nach oben ziegelartig übereinander liegend montiert. Abschliessend wird auf den Installationsschienen 21 jeweils eine Schienenabdeckung 22 aufgeschraubt, welche die Solarzellen formschlüssig fixiert.

### AUFGABE DER ERFINDUNG

Eine Aufgabe der Erfindung ist es, Verkleidungssysteme der eingangs genannten Art mit einem Bauelement und mindestens zwei Tragelementen zur Verfügung zu stellen, das die oben erwähnten und andere Nachteile nicht aufweist. Insbesondere sollen die Bauelemente und Tragelemente einfach und schnell und somit kostengünstig montierbar sein.
Zudem soll es mit dem erfindungsgemässen Verkleidungssystem möglich sein, ein Schrägdach oder eine Fassade von oben nach unten zu decken. Auch soll es möglich sein, bei einer fertigen Gebäude-Verkleidung einzelne Bauelemente auszuwechseln, ohne dass andere Bauelemente entfernt werden müssen.

Noch eine weitere Aufgabe der Erfindung ist es, ein Verkleidungssystem mit Bauelementen und Tragelementen zur Verfügung zu stellen, das ohne zusätzliche, separate Dichtelemente aus Kunststoff auskommt.

Ebenfalls eine Aufgabe der Erfindung ist es, ein Verkleidungssystem mit Bauelementen und Tragelementen zur Verfügung zu stellen, welches von einer einzelnen Person montiert werden kann, selbst wenn es grössere Dimensionen hat. Die Arbeitssicherheit soll dabei höher sein als bei herkömmlichen Bauelementen.

Eine weitere Aufgabe der Erfindung ist es, ein Verkleidungssystem mit Bauelementen und Tragelementen zur Verfügung zu stellen, mit welchem Dächer und Fassaden regendicht abgedeckt werden können, wobei ein möglichst geringer Materialverbrauch anfällt.

Ein erfindungsgemässes Verkleidungssystem mit Bauelementen und Tragelementen soll auch in kleineren Serien kostengünstig herstellbar sein.
Diese und andere Aufgaben werden gelöst durch ein erfindungsgemässes Verkleidungssystem gemäss dem unabhängigen Anspruch 1. Bevorzugte Ausführungsarten der Erfindung sind in den abhängigen Ansprüchen angegeben.

### DARSTELLUNG DER ERFINDUNG

Ein erfindungsgemässes Verkleidungssystem zur Verkleidung einer Gebäudeaussenfläche, insbesondere eines Schrägdaches oder einer Fassade, mit einer Mehrzahl überlappender Bauelemente umfasst mindestens ein Bauelement und mindestens zwei Tragelemente zur lösbaren Fixierung des mindestens einen Bauelements auf einer Unterkonstruktion. Das Bauelement umfasst einen Rahmen, der ein oberes Profil, ein unteres Profil und zwei seitliche Profile aufweist. Das Tragelement weist ein längliches Profil mit mindestens einem Haltemittel auf. Die zwei seitlichen Profile des Rahmens weisen jeweils an ihrer äusseren Wandung eine Aussparung auf, in welche jeweils eines der Haltemittel zur lösbaren Fixierung des Bauelements in Eingriff bringbar ist, wobei die Aussparung in Richtung von der Witterungsseite weg offen ist und an einem unteren Längsende des seitlichen Profils angeordnet ist. Das Tragelement des erfindungsgemässen Verkleidungssystems weist ein längliches Profil mit mindestens einem Haltemittel auf. Die wei seitlichen Profile des Rahmens weisen jeweils an ihrer äusseren Wandung eine Aussparung auf, in welche jeweils eines der Haltemittel zur lösbaren Fixierung des Bauelements eingreift. Die Aussparung ist in Richtung von der Witterungsseite weg offen, und ist an einem unteren Längsende des seitlichen Profils angeordnet. Mit dem "unteren Längsende" ist dabei dasjenige Längsende gemeint, welches in Fallrichtung näher am Erdboden ist.

Das Tragelement des erfindungsgemässen Verkleidungssystems weist entlang seiner Längsachse mindestens zwei Haltemittel auf, wobei der Abstand zwischen zwei benachbarten Haltemittel dem Abstand zwischen den oberen Profilen von zwei in Längsrichtung des Tragelementes benachbart montierten Bauelementen entspricht. Auf zwei parallel verlaufenden Tragelementen können demnach mehrere Bauelemente von oben nach unten montiert werden. Durch hinzufügen eines weiteren Tragelements kann eine weitere Reihe Bauelemente angebracht werden. Da die Aussparung, beispielsweise eine Nut, von der Witterungsseite weg zeigt, also von der äusseren Oberfläche des Bauelements weg, kann das Haltemittel mit der Aussparung in Eingriff gebracht werden, ohne dass eine Verschiebung des Bauelements entlang der Tragelemente notwendig ist. Dies erlaubt eine kompaktere Montage. Die Position der Aussparung am unteren Längsende eines zu montierenden Bauelements wiederum erlaubt es, das obere Längsende des Bauelements unter ein bereits montiertes oberes Bauelement zu schieben. Danach wird das Bauelement in die Montageposition eingeschwenkt, bei der Aussparung und Halteelement ineinander eingreifen.
Dieses System hat den Vorteil, dass sie wenige Einzelteile und keine relativ kleinen Elemente aufweist, welche an genau vorausbestimmten Stellen auf der Unterkonstruktion befestigt werden müssen. Dadurch werden bei der Montage viel Zeit und somit Montagekosten eingespart.
Vorzugsweise ist das Tragelement als Rinne gestaltet, so dass das Wasser welches zwischen zwei seitlich benachbarten Bauelementen durchdringt über entlang dem Tragelement ablaufen kann. Demnach erfüllt das Tragelement des erfindungsgemässen Verkleidungssystems zwei Funktionen, nämlich das Tragen oder das Halten der Bauelemente und das Abführen von Wasser, welches zwischen die Bauelement dringt. Es sind keine weiteren Elemente für die Verkleidung der Gebäudeaussenfläche notwendig.

Das Haltemittel kann z.B. ein Bolzen sein, welcher quer zur Längsachse des Tragelementes angeordnet ist. Dieser Bolzen kann zudem ein Federelement aufweisen. Das Haltemittel kann auch in Form eines Stegs, einer Brücke oder als Querprofil ausgestaltet sein.
Vorzugsweise sind die Aussparungen an einem unteren, dem unteren Profil zugewandten Ende des seitlichen Profils angeordnet.
In einer Ausführungsform des erfindungsgemässen Verkleidungssystems kann das Haltemittel jeweils in die Aussparung der benachbarten seitlichen Profile von zwei seitlich benachbarten Bauelementen (1) eingreifen, wobei die Aussparung in Richtung von der Witterungsseite weg offen ist. D.h. an einem Haltemittel werden zwei seitlich benachbarte Bauelemente gehalten. Die Aussparung kann sich in Richtung von der Witterungsseite weg schräg aufweiten, um ein Montieren der Bauelemente zu erleichtern.

In einer weiter bevorzugten Ausführungsform des erfindungsgemässen Verkleidungssystems weist die Aussparung einen Hinterschnitt auf, in welchen das Haltemittel eingreifbar ist, wobei der Hinterschnitt in Richtung des oberen Profils zeigt. Dadurch wird ein einfaches Abheben des Bauelements senkrecht zur Unterkonstruktion verhindert.

In einer noch weiter bevorzugten Ausführungsform des erfindungsgemässen Verkleidungssystems weist die Aussparung zwei Hinterschnitte auf, in welche ein Federelement, welches an dem Bolzen angebracht ist, einrasten kann. Dadurch wird ebenfalls ein einfaches Abheben des Bauelements senkrecht zur Unterkonstruktion verhindert.

In noch einer weiteren Ausführungsform des erfindungsgemässen Verkleidungssystems ist die Aussparung an einem seitlichen Rand des seitlichen Profils angeordnet, d.h. an dem seitlichen Rand, welcher dem unteren Profil zugewandt ist, und sie erstreckt sich in Richtung des oberen Profils.

In allen Ausführungsformen ist im Rahmen des Bauelements vorzugsweise ein Paneel, z.B. ein Photovoltaikmodul oder ein Sonnenkollektor-Modul zur Gewinnung von Warmwasser oder aber auch eine einfache Abdeckung, beispielsweise aus Metallblech, Glas, oder Kunststoff, dichtend gehalten.

Das obere Profil und das untere Profil können derart ausgestaltet sein, dass sie mit einem unteren Profil beziehungsweise oberen Profil eines baugleichen Rahmens eines benachbarten Bauelements zur Witterungsseite hin einen regendichten Abschluss bilden. Regendicht bedeutet im Zusammenhang der beschriebenen Erfindung nicht absolut wasserdicht, sondern dicht gegen das Eindringen von Wasser aufgrund äusserer Witterungsseinflüsse, insbesondere Regen.

Zudem können die Paneele von in Längsrichtung und in seitlicher Richtung des Tragelements benachbart montierten Bauelementen in einer Ebene liegen, was ästhetisch ansprechend wirkt und eine Anhäufung von Dreck verringert.

Die Erfindung betrifft weiter eine Verkleidung einer Gebäudeaussenfläche, insbesondere eines Schrägdaches oder einer Fassade. Die Verkleidung umfasst Bauelemente und Tragelemente des erfindungsgemässen Verkleidungssystems. Vorzugsweise sind die Bauelemente der Verkleidung derart angebracht, dass die Abstände zwischen benachbarten Bauelementen eine thermische Ausdehnung der Bauelemente und ein Demontieren eines einzelnen Bauelements, ohne Demontage eines der benachbarten Bauelement, erlaubt.

### KURZE ERLÄUTERUNG ZU DEN FIGUREN

Die Erfindung soll nachfolgend anhand von Ausführungsbeispielen im Zusammenhang mit der Zeichnung näher erläutert werden. Es zeigen:
- Fig.1: eine Draufsicht auf ein erfindungsgemässes Verkleidungssystem mit mehreren Bauelemente und Tragelementen im montierten Zustand;
- Fig. 2: Schnittdarstellungen der Profile benachbart montierter Bauelemente eines erfindungsgemässen Verkleidungssystems unter (a) ein oberes und ein unteres Profil und unter (b) zwei seitliche Profile;
- Fig. 3: eine Seitenansicht auf einen Eckbereich des Profilrahmens einer Ausführungsform eines Bauelements mit dem seitlichen Profil und dem unteren Profil;
- Fig. 4: eine Schnittdarstellung einer Ausführungsform eines Tragelements des erfindungsgemässen Verkleidungssystems;
- Fig. 5: zwei seitlich benachbarte Bauelemente 1 und ein Tragelement 5 in einer Seitenansicht gezeigt;
- Fig. 6: eine Seitenansicht einer Ausführungsform der Aussparung des seitlichen Profils;
- Fig. 7: unter (a) eine perspektivische Ansicht eines Federelements und unter (b) ein Querschnitt durch das Federelement;
- Fig. 8: eine Seitenansicht des seitlichen Profils mit einem eingerasteten Federelement;
- Fig. 9: eine Seitenansicht einer weiteren Ausführungsform der Aussparung des seitlichen Profils eines nicht erfindungsgemässen Verkleidungssystems; und
- Fig. 10: Schnittdarstellungen eines oberen Profils und eines unteren Profils benachbarter Bauelemente eines erfindungsgemässen Verkleidungssystems, (a) beim Einschwenken des unteren Bauelements unter das obere Bauelement bei der Montage, und (b) nach erfolgter Montage.

### WEGE ZUR AUSFÜHRUNG DER ERFINDUNG

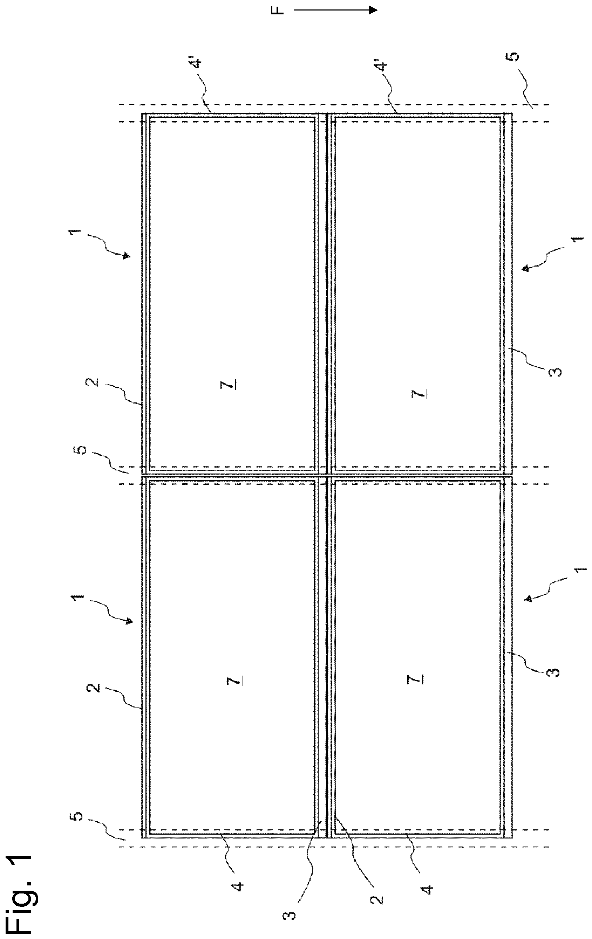

Fig. 1 zeigt eine Draufsicht auf erfindungsgemässes Verkleidungssystem mit mehreren Bauelementen 1 und Tragelementen 5 im montierten Zustand. Die Bauelemente 1 sind auf mehreren Tragelementen 5, mit gestrichelten Linien dargestellt, fixiert. Die Bauelemente 1 weisen einen Profilrahmen aus einem oberen Profil 2, einem unteren Profil 3 und zwei seitlichen Profilen 4, 4' auf. Im Profilrahmen ist ein Paneel 7 derart gehalten und befestigt, dass die Verbindung zwischen Paneel 7 und Profilrahmen regendicht ist. Das Paneel 7 kann z.B. ein Photovoltaikmodul sein, oder ein Sonnenkollektor-Modul zur Gewinnung von Warmwasser, oder aber auch eine einfache Abdeckung, beispielsweise aus Metallblech, Glas, oder Kunststoff.

Die Dichtung zwischen Profilrahmen und Paneel 7 kann dabei mit einer Silikongummi-Dichtung, einer umlaufenden Dichtlippe aus einem geeigneten Elastomer, doppelseitigem Klebeband, Dichtungsband, Klebstoff oder einem anderen geeigneten Mittel erreicht werden.

Die Profile sind vorzugsweise aus Leichtmetall im Stranggussverfahren gefertigt. Um den Rahmen zu bilden, werden die Profile vorzugsweise miteinander verschraubt. Alternativ sind andere Befestigungstechniken denkbar, beispielsweise Löten, Kleben, Schweissen, Pressen oder Nieten.

Der Aufbau des Profilrahmens aus einfachen Profilen hat neben reduzierten Kosten auch den Vorteil, dass durch einfaches Ablängen der Profile sehr schnell der Profilrahmen für ein Paneel 7 beliebiger Grösse gefertigt werden kann. Auf diese Weise können zum einen spezielle Dimensionierungswünsche ohne zusätzliche Kosten berücksichtigt werden, und zum anderen können zugekaufte Photovoltaik-Module sehr einfach in einem erfindungsgemässen Bauelement verbaut werden.

Sollte zu einem späteren Zeitpunkt der Ersatz eines Bauelements 1 notwendig werden, die entsprechenden Profilrahmen aber nicht mehr zur Verfügung stehen, so kann auch nur das Photovoltaik-Modul ersetzt werden. Im in den Figuren gezeigten Ausführungsbeispiel, welches ohne - für ein erfindungsgemässes Verkleidungssystem ebenfalls mögliche - U-förmige Halterungsnuten auskommt, ist es zudem nicht notwendig, zum Austausch den Rahmen zu zerlegen. Auch kann sich wegen dem Fehlen von vorstehenden Kanten weniger Schmutz ansammeln.

Die Tragelemente 5 verlaufen parallel zur Fallrichtung F und zu den seitlichen Profilen 4, 4' und sind auf einer Unterkonstruktion (nicht dargestellt) befestigt. Die Bauelemente 1 werden jeweils lösbar auf den Tragelementen 5 befestigt, wie weiter unten im Detail erläutert wird. Die Tragelemente 5 sind als Rinne ausgestaltet und bilden die Ablaufrinnen für Wasser, welches zwischen zwei seitlich benachbarten Bauelementen eindringen kann. Benachbarte Bauelemente 1 sind seitlich beabstandet, so dass sich bei einer Längenausdehnung der Bauelemente 1 aufgrund eines Temperaturwechsels keine mechanischen Spannungen aufbauen können.

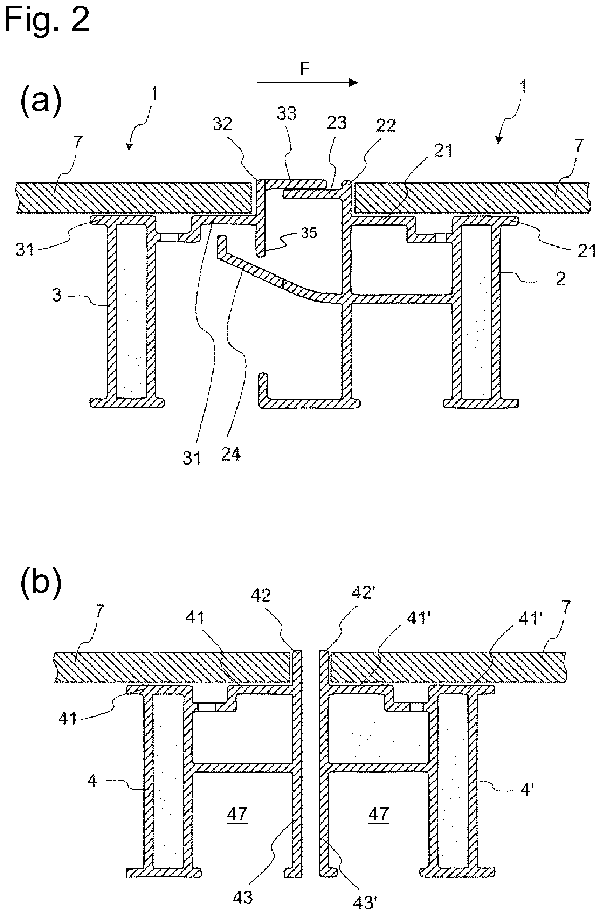

Fig. 2 zeigt Schnittdarstellungen der Profile des Bauelements 1 einer vorteilhaften Ausführungsform unter (a) ein oberes Profil 2 und ein unteres Profil 3 von zwei benachbarten Bauelementen 1 im montierten Zustand und unter (b) jeweils ein seitliches Profil 4, 4' von zwei benachbart montierten Bauelementen, wobei das Tragelement 5 nicht dargestellt ist. Bei allen Profilen ist ein Paneel 7 dargestellt, welche in einem Lagerungsabschnitt 21, 31, 41, 41' des jeweiligen Profils gelagert ist. Das Paneel 7 ist z.B. mit einem Silikon-Kleber im Profilrahmen regendicht befestigt. Die befestigten Paneele fluchten im Wesentlichen mit der äusseren witterungsseitigen Kante 22, 32, 42, 42' der Profile. Die Profile sind vorzugsweise derart gestaltet, dass die Paneele 7 im montierten Zustand der Bauelemente 1 jeweils mit den Paneelen der benachbart montierten Bauelementen 1 in einer Ebene liegen.

Das obere Profil 2 weist an der Witterungsseite eine Dichtlippe 23 auf, welche gegenüber der äusseren Kante 22 leicht versetzt ist. Diese Versetzung beträgt in etwa die Stärke der Dichtlippe 23. Die Dichtlippe 23 verläuft parallel zur witterungsseitigen Oberfläche des Paneels. Das untere Profil 3 weist an der Witterungsseite eine Dichtlippe 33 auf, welche an der äusseren Kante 32 ansetzt und im Wesentlichen plan zum Paneel 7 ist.

Im montierten Zustand der Bauelemente 1 liegt die Dichtlippe 33 des unteren Profils 3 auf der Dichtlippe 23 des oberen Profils 2 auf, so dass Regenwasser überwiegend in Fallrichtung F über die beiden Dichtlippen 23, 33 ablaufen kann und nicht zwischen die Bauelemente 1 eindringt. Kleine Mengen an Wasser die dennoch zwischen den Dichtlippen 23, 33 hindurchsickern und Kondenswasser, welches sich an der Unterseite bilden kann, werden in einer Auffangrinne 24 des oberen Profils 2 aufgefangen und laufen seitlich zum Tragelement 5 hin ab. Die Auffangrinne 24 ist durch einen zur Witterungsseite hin gebogenen Schenkel des oberen Profils 2 ausgebildet. Der Winkel zwischen dem Schenkel und der im wesentlichen planen Witterungsseite beträgt etwa 25 Grad, so dass das Bauelement 1 beim Anbringen auf die Unterkonstruktion mit einem Anstellwinkel von ungefähr 25 Grad unter ein bereits montiertes Bauelement 1 geschoben werden kann, was weiter unten noch detaillierter erläutert wird. An den Enden des oberen Profils 2 ist die Auffangrinne 24 abgeschrägt, z.B. unter einem Winkel von etwa 45 Grad, damit die Auffangrinne 24 nicht mit dem seitlichen Profilen 4, 4' des benachbart montierten Bauelements 1 in Berührung kommt.

Das untere Profil 3 weist zudem eine Abtropfkante 35 auf, welche sich von der äusseren Kante 32 des Profils 3 aus in Richtung von der Witterungsseite weg erstreckt und derart angeordnet ist, dass im montierten Zustand durch die Dichtlippen 23, 33 unerwünscht eindringendes Wasser oder Kondensationswasser in die Auffangrinne 24 des oberen Profils 2 des benachbart montierten Bauelements 1 abtropfen kann. Die Auffangrinne 24 und die Abtropfkante 35 sind derart angeordnet, dass sich bei einer Längenausdehnung der Bauelemente 1 aufgrund eines Temperaturwechsels keine mechanischen Spannungen aufbauen können.

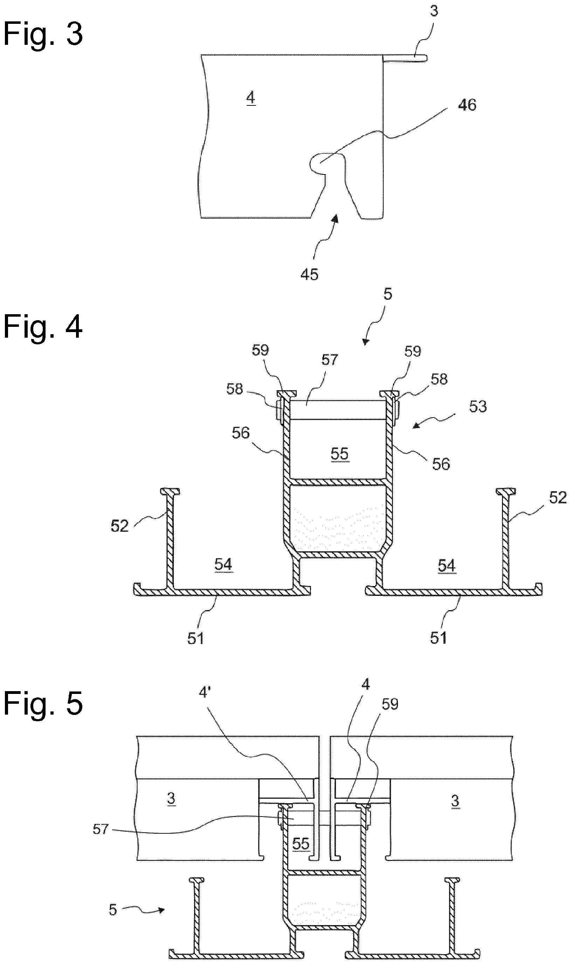

Das obere Profil 2 und das untere Profil 3 weisen an den Enden eine Aussparung auf, welche derart dimensioniert ist, dass der Profilrahmen des Bauelements 1 die innere Wandung 56 und den Lagerungsabschnitt 59 des länglichen Profils des Tragelements 5 aufnehmen können, wie in Fig. 5 für das untere Profil 3 dargestellt.

Die seitlichen Profile, wie in Fig. 2(b) dargestellt, weisen eine äussere seitliche Wand 43, 43' auf, welche mit der äusseren witterungsseitigen Kante 41, 41' fluchtet. Die seitlichen Profile 4, 4' weisen weiter in Längsrichtung eine Nut 47 auf, in welche die innere Wandung 56 und der Lagerungsabschnitt 59 des Tragelements aufgenommen werden kann, wie in Fig. 5 gezeigt. Die Nut 47 ist derart dimensioniert, dass sich bei einer Längenausdehnung der Bauelemente 1 aufgrund eines Temperaturwechsels keine mechanischen Spannungen aufbauen können.

Fig. 3 zeigt eine Seitenansicht auf einen Eckbereich des Profilrahmens mit dem seitlichen Profil 4 und dem unteren Profil 3. Von dem unteren Profil 3 ist lediglich die Dichtlippe 32 zu erkennen. Das seitliche Profil 4 weist an der der Witterungsseite abgewandter Seite eine erste Ausführungsform einer Aussparung 45 auf. Die Aussparung 45 ist in Richtung von der Witterungsseite weg schräg aufgeweitet. Zur Witterungsseite hin weist die Aussparung 45 einen Hinterschnitt 46 auf, welcher im Wesentlichen parallel zur Längsrichtung des seitlichen Profils 4 verläuft und in Richtung des oberen Profils zeigt. Das gegenüberliegende Profil 4' weist ebenfalls eine Aussparung mit Hinterschnitt auf. Beide Aussparungen 45 sind in der äusseren Wand 43, 43' der seitlichen Profile 4, 4' angeordnet. Die abgeschrägten Seiten der Aussparung 45 erleichtern das Einführen eines auf einem Tragelement 5 angeordneten Haltemittels.

Die Länge des Hinterschnitts ist derart dimensioniert, dass sie in etwa dem Abstand des Endes der Dichtlippe 23, 33 zu der äusseren Kante 22, 32 des benachbart montierten Bauelements entspricht. Dies ermöglicht das notwendige Verrutschen beim Montieren des Bauelements 1, wie weiter unten beschrieben.

Die Dichtlippen 23, 33 weisen zur äusseren Kante 22, 32 der entsprechenden Profile von benachbart montierten ein gewisses Spiel auf, so dass sich bei einer Längenausdehnung der Bauelemente 1 aufgrund eines Temperaturwechsels keine mechanischen Spannungen aufbauen können. Dies ist bei Bauelementen 1 mit Photovoltaik-Paneelen besonders wichtig, da sie sich aufgrund der dunklen Farbgebung besonders schnell erhitzen und abkühlen, so dass über den Verlauf eines Tages eine erhebliche Längenveränderung resultieren kann. Das gleiche gilt für die Auffangrinne 24 und die Abtropfkante 35. Zudem ist die durch den gebogenen Schenkel gestaltete Auffangrinne 24 des oberen Profils 2 derart ausgestaltet, dass er während der Montage des Bauelements 1 unter die Abtropfkante 35 des unteren Profils 3 des benachbarten Bauelements 1 geschoben werden kann, ohne es zu berühren.

Bei der Montage der Bauelemente 1 kann in einer Ausführungsform der Bauelemente 1 das zu montierende Bauelement 1 noch leicht nach unten rutschen. Das obere Profil 2 und das untere Profil 3 sind auch für ein solches Verrutschen entsprechend ausgestaltet, so dass sich die Profile 2, 3 nur über die Dichtlippen 23, 33 berühren. Die Dichtlippen 23, 33 liegen aufeinander auf. Neben der Dichtwirkung ergibt dies auch eine einfache elektrische Verbindung der vorteilsweise aus Strangguss-Aluminium gefertigten Profile, und damit aller Bauelemente untereinander. Dies erleichtert die sachgemässe Erdung eines erfindungsgemässen Verkleidungssystems.

In Fig. 4 ist eine Schnittdarstellung einer Ausführungsform eines erfindungsgemässen Tragelements 5 gezeigt. Das Tragelement 5 weist ein längliches Profil auf und wird zur Fixierung des Bauelements 1 parallel zur Fallrichtung F auf einer Unterkonstruktion befestigt. Das Profil des Tragelements 5 umfasst Standflächen 51, zwei seitliche Wandungen 52, und einen Halterungsabschnitt 53. Mit der Standfläche 51 kann das Tragelement 5 auf der Unterkonstruktion befestigt werden. Die Standflächen 51, die seitlichen Wandungen 52 und der Halterungsabschnitt 53 bilden zwei Rinnen 54, in welchen Wasser abfliessen kann. Eine weitere Rinne 55 ist im Halteabschnitt 53 durch zwei innere Wandungen 56 ausgestaltet. Die inneren Wandungen 56 weisen zudem einen Lagerungsabschnitt 59 auf, auf welchem die Bauelemente 1 im montierten Zustand aufliegen. Ein Bolzen 57 ist als Haltemittel für die Bauelemente 1 quer zur Längsrichtung des Tragelements 5 an den inneren Wandungen 57 angebracht. Der Bolzen 57 ist mit einem Sicherungselement 58, z.B. eine Sicherungsscheibe, gesichert.

In Fig. 5 ist das Tragelement wie in Fig. 4 gezeigt. Zusätzlich sind zwei seitlich benachbart montierte Bauelemente 1 in einer Seitenansicht dargestellt. Von den Bauelementen 1 sind jeweils die Eckbereich mit dem unteren Profil 3 und jeweils einem seitlichen Profil 4, 4' dargestellt. Die seitlichen Profile 4, 4' sind mit deren Aussparungen an dem Bolzen 57 gehalten, so dass die seitlichen Profile 4, 4' auf dem Lagerungsabschnitt 59 des Tragelements 5 aufliegen. Ein Abgleiten des Bauelements 1 wird dadurch verhindert. Somit liegt das Bauelement 1 hauptsächlich auf dem Lagerungsabschnitt 59 des Tragelements 5 auf und die Bolzen 57 sind je nach Dachneigung nur zu einem geringen Teil belastet. Zwischen den beiden Bauelementen 1 ist ein Spalt vorhanden, so dass sich bei einer Längenausdehnung der Bauelemente 1 aufgrund eines Temperaturwechsels keine mechanischen Spannungen aufbauen können. Wasser, welches seitlich zwischen den Bauelementen 1 eindringen kann, läuft über die Rinne 55 des Tragelements 5 ab.

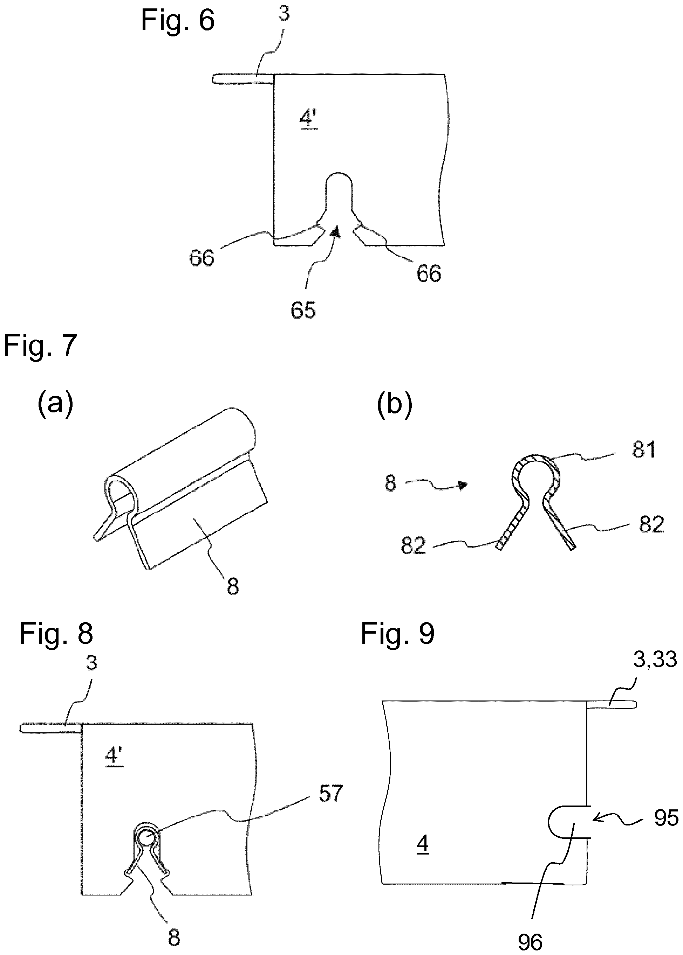

Fig. 6 zeigt eine Seitenansicht auf einen Eckbereich des Profilrahmens einer weiteren vorteilhaften Ausführungsform mit dem seitlichen Profil 4' und dem unteren Profil 3. Von dem unteren Profil 3 ist lediglich die Dichtlippe 32 zu erkennen. Das seitliche Profil 4' weist an der der Witterungsseite abgewandter Seite eine zweite Ausführungsform einer Aussparung 65 auf. Die Aussparung 65 ist in Richtung von der Witterungsseite weg schräg aufgeweitet und weist zwei Hinterschnitte 66 auf. Das gegenüberliegende Profil 4 weist ebenfalls eine Aussparung mit Hinterschnitt auf. In die Aussparung 65 kann ein Federelement 8, wie es in Fig. 7(a) und Fig. 7(b) dargestellt ist, einrasten. Das Federelement 8 weist eine kreisförmigen Bereich 81 und zwei Schenkel 82 auf. Mit dem kreisförmigen Bereich 81 kann es auf dem Bolzen befestigt werden. Die Schenkel 82 können in die Hinterschnitte 66 der Aussparung 65 einrasten, wie in Fig. 8 dargestellt.

Das Federelement 8 ist demnach derart dimensioniert, dass es zwischen den inneren seitlichen Wandungen 56 des Tragelements 5 mit dem kreisförmigen Abschnitt 81 um den Bolzen 57 gelegt werden kann. Beim Auflegen den Bauelements 1 auf das Tragelement 5, werden die Schenkel 82 des Federelements 8 durch die schrägen seitlichen Kanten der Aussparung 65 in den seitlichen Profilen 4, 4' zusammengedrückt, bis sie in den beiden Hinterschnitten 66 unter Ausdehnung einrasten, wie in Fig. 8 gezeigt. Das Federelement 8 kann mit einem dazu geeigneten Werkzeug, beispielsweise eine Zange, zusammengedrückt werden, um das Bauelement 1 wieder von dem Tragelement 5 zu entfernen.

Fig. 9 zeigt eine Seitenansicht auf einen Eckbereich des Rahmens eines nicht erfindungsgemässen Verkleidungssystems mit dem seitlichen Profil 4 und dem unteren Profil 3. Von dem unteren Profil 3 ist lediglich die Dichtlippe 33 zu erkennen. Das seitliche Profil 4 weist der dem unteren Profil 3 zugewandten Seite eine Aussparung 95 auf. Die Aussparung 95 erstreckt sich in Richtung oberes Profil und bildet demnach von der der Witterungsseite abgewandten Seite her gesehen eine Hinterschnitt 96. Demnach weist die Aussparung 95 resp. der Hinterschnitt 96 die gleiche Funktion auf, wie der Hinterschnitt 46 der Ausführungsform aus Fig. 3.

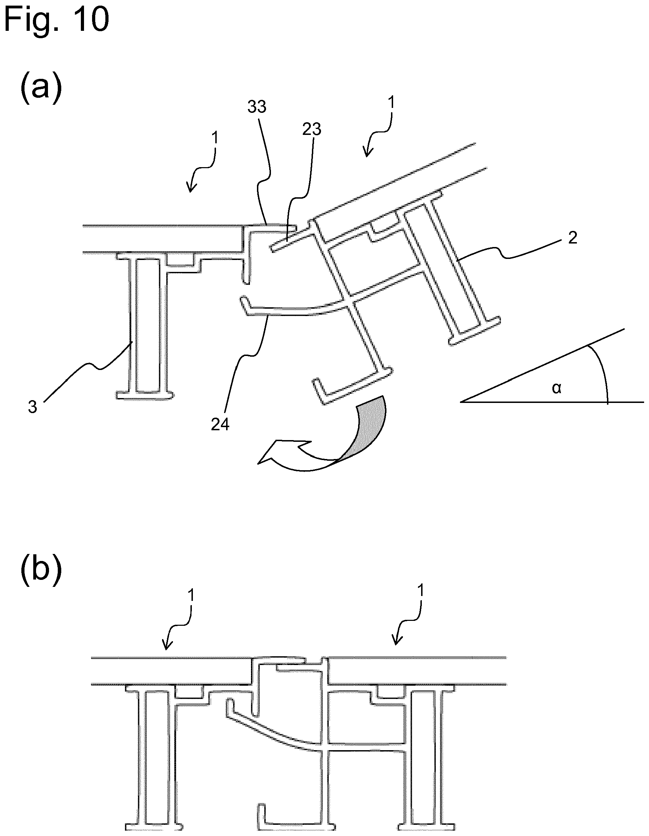

Um eine Gebäudeaussenfläche regendicht zu verkleiden, werden die vorgängig zusammengebauten Bauelemente 1 auf der Unterkonstruktion von oben nach unten verlegt. Das zu platzierende Bauelement 1 wird mit einem Anstellwinkel α von vorteilhaft etwa 25 Grad, wie in Fig. 10(a) ausschnittsweise gezeigt, unter das bereits montierte obere Bauelement 1 geschoben. Anschliessend wird das Bauelement 1 mit einer Schwenkbewegung flach auf das Tragelement 5 gelegt. Gleichzeitig greift am unteren Ende der seitlichen Profile 4, 4' der am Tragelement 5 montierte Bolzen 57 in die Aussparung 45, 65 am seitlichen Profil 4, 4' ein. Bei der Ausführungsform aus Fig. 3 mit einem Hinterschnitt 46 rutscht das Bauelement 1 durch die Schwerkraft leicht nach unten, wobei der Bolzen 57 in den Hinterschnitt 46 der Aussparung 45 eingreift. Dadurch kann ein Abheben senkrecht zur Unterkonstruktion verhindert werden. Im Unterschied dazu ist bei der Ausführungsform aus Fig. 6 bis 8 kein Verrutschen des Bauelements 1 notwendig. Das Federelement 8 rastet beim Auflegen des Bauelements 1 auf das Tragelement 5 in den beiden Hinterschnitten 66 der Aussparung 65 ein und verhindert dadurch ebenfalls ein Abheben senkrecht zur Unterkonstruktion. Das Bauelement 1 mit einer Aussparung 45 nach der Ausführungsform in Fig. 3 kann durch nach oben schieben und anschliessendes Abheben wieder von dem Tragelement 5 gelöst werden. Beim einem Bauelement 1 mit einer Aussparung 65 nach der Ausführungsform in Fig. 6 bis 8 kann das Federelement 8 mit einem geeigneten Werkzeug zusammengedrückt werden, indem z.B. ein Schlüssel zwischen den zwei seitlich benachbarten Bauelementen 1 eingeführt wird, und das Bauelement 1 kann anschliessendes durch Abheben vom Tragelement 5 entfernt werden.

### BEZEICHNUNGSLISTE

- 1: Bauelement
- 2: oberes Profil
- 3: unteres Profil
- 4, 4': seitliches Profil
- 5: Tragelement
- 7: Paneel
- 21: Lagerungsabschnitt
- 22: Kante
- 23: Dichtlippe
- 24: Auffangrinne
- 31: Lagerungsabschnitt
- 32: Kante
- 33: Dichtlippe
- 35: Abtropfkante
- 41, 41': Lagerungsabschnitt
- 42, 42': Kante
- 43, 43': äussere Wand
- 45: Aussparung
- 46: Hinterschnitt
- 47: Nut
- 51: Standfläche
- 52: seitliche Wandung
- 53: Halteabschnitt
- 54: Rinne
- 55: Rinne
- 56: innere Wandung
- 57: Bolzen
- 58: Sicherungselement
- 59: Lagerungsabschnitt
- 65: Aussparung
- 66: Hinterschnitt
- 81: kreisförmiger Abschnitt
- 82: Schenkel
- 95: Aussparung
- 96: Hinterschnitt
- F: Fallrichtung

## Patentansprüche

1. Verkleidungssystem zur Verkleidung einer Gebäudeaussenfläche, insbesondere eines Schrägdaches oder einer Fassade, mit einer Mehrzahl überlappender Bauelemente (1), umfassend mindestens ein Bauelement (1) und mindestens zwei Tragelemente (5) zur lösbaren Fixierung des mindestens einen Bauelements (1) auf einer Unterkonstruktion, wobei das Bauelement (1) einen Rahmen umfasst, der ein oberes Profil (2), ein unteres Profil (3) und zwei seitliche Profile (4, 4') aufweist, das Tragelement (5) ein längliches Profil mit mindestens einem Haltemittel (57, 8) aufweist, und die zwei seitlichen Profile (4, 4') des Rahmens jeweils an ihrer äusseren Wandung eine Aussparung (45, 65) aufweisen, in welche jeweils eines der Haltemittel (57,8) zur lösbaren Fixierung des Bauelements (1) in Eingriff bringbar ist, wobei die Aussparung in Richtung von der Witterungsseite weg offen ist, **dadurch gekennzeichnet, dass** die Aussparung des Bauelements an einem unteren Längsende des seitlichen Profils angeordnet ist, und dass das Tragelement entlang seiner Längsachse mindestens zwei Haltemittel (57, 8) aufweist und der Abstand zwischen zwei benachbarten Haltemittel (57, 8) dem Abstand zwischen den oberen Profilen von zwei in Längsrichtung des Tragelementes benachbart montierten Bauelementen entspricht.

2. Verkleidungssystem nach Anspruch 1, **dadurch gekennzeichnet, dass** das Tragelement als durchgehende Rinne ausgebildet ist.

3. Verkleidungssystem nach einem der vorangehenden Ansprüche, **dadurch gekennzeichnet, dass** das Haltemittel ein Bolzen (57), ein Steg oder eine Brücke ist, welcher quer zur Längsachse des Tragelementes (5) angeordnet ist.

4. Verkleidungssystem nach einem der vorangehenden Ansprüche, **dadurch gekennzeichnet, dass** das Haltemittel ein Federelement (8) aufweist.

5. Verkleidungssystem nach einem der vorangehenden Ansprüche, **dadurch gekennzeichnet, dass** das Haltemittel (57, 8) jeweils in die Aussparung (45, 65, 95) der benachbarten seitlichen Profile (4, 4') von zwei seitlich benachbarten Bauelementen (1) in Eingriff bringbar ist.

6. Verkleidungssystem nach einem der vorangehenden Ansprüche, **dadurch gekennzeichnet, dass** die Aussparung (45, 65) sich in Richtung von der Witterungsseite weg schräg aufweitet.

7. Verkleidungssystem nach einem der vorangehenden Ansprüche, **dadurch gekennzeichnet, dass** die Aussparung (45, 65) mindestens einen Hinterschnitt (46, 66) aufweist, in welchen das Haltemittel (57, 8) in Eingriff bringbar ist.

8. Verkleidungssystem nach einem der vorangehenden Ansprüche, **dadurch gekennzeichnet, dass** der Hinterschnitt (46) in Richtung des oberen Profils zeigt.

9. Verkleidungssystem nach einem der vorangehenden Ansprüche, **dadurch gekennzeichnet, dass** im Rahmen des Bauelements (1) ein Paneel (7) dichtend gehalten ist.

10. Verkleidungssystem nach einem der vorangehenden Ansprüche, **dadurch gekennzeichnet, dass** das obere Profil (2) und das untere Profil (3) derart ausgestaltet sind, dass sie mit einem unteren Profil (3) beziehungsweise oberen Profil (2) eines baugleichen Rahmens eines benachbarten Bauelements (1) zur Witterungsseite hin einen regendichten Abschluss bilden.

11. Verkleidungssystem nach Anspruch 9 oder 10, **dadurch gekennzeichnet, dass** die Paneele (7) von in Längsrichtung und in seitlicher Richtung des Tragelements benachbart montierten Bauelemente (1) in einer Ebene liegen.

12. Verkleidung einer Gebäudeaussenfläche, insbesondere eines Schrägdaches oder einer Fassade, **dadurch gekennzeichnet, dass** sie Bauelemente (1) und Tragelemente (5) des Verkleidungssystems nach einem der Ansprüche 1 bis 11 umfasst.

13. Verkleidung nach Anspruch 12, **dadurch gekennzeichnet, dass** die Bauelemente derart angebracht sind, dass die Abstände zwischen benachbarten Bauelementen eine thermische Ausdehnung der Bauelemente und ein Demontieren eines einzelnen Bauelements, ohne Demontage eines der benachbarten Bauelement, erlaubt.

## Claims

1. Cladding system for cladding an external surface of a building, in particular a pitched roof or a façade, having a plurality of overlapping structural elements (1), comprising at least one structural element (1) and at least two support elements (5) for releasably fixing the at least one structural element (1) on a substructure, wherein the structural element (1) comprises a frame which has an upper profile (2), a lower profile (3) and two lateral profiles (4, 4'), the support element (5) has an elongate profile with at least one holding means (57, 8), and the two lateral profiles (4, 4') of the frame each have on their outer wall a cutout (45, 65) in each of which one of the holding means (57, 8) can be brought into engagement for releasably fixing the structural element (1), wherein the cutout is open in the direction away from the weather side, **characterized in that** the cutout of the structural element is arranged on a lower longitudinal end of the lateral profile, and **in that** the support element has at least two holding means (57, 8) along its longitudinal axis and the distance between two adjacent holding means (57, 8) corresponds to the distance between the upper profiles of two structural elements mounted adjacently in the longitudinal direction of the support element.

2. Cladding system according to Claim 1, **characterized in that** the support element is designed as a continuous channel.

3. Cladding system according to one of the preceding claims, **characterized in that** the holding means is a bolt (57), a web or a bridge which is arranged transversely with respect to the longitudinal axis of the support element (5).

4. Cladding system according to one of the preceding claims, **characterized in that** the holding means has a spring element (8).

5. Cladding system according to one of the preceding claims, **characterized in that** the holding means (57, 8) can in each case be brought into engagement in the cutout (45, 65, 95) of the adjacent lateral profiles (4, 4') of two laterally adjacent structural elements (1).

6. Cladding system according to one of the preceding claims, **characterized in that** the cutout (45, 65) widens obliquely in the direction away from the weather side.

7. Cladding system according to one of the preceding claims, **characterized in that** the cutout (45, 65) has at least one undercut (46, 66) in which the holding means (57, 8) can be brought into engagement.

8. Cladding system according to one of the preceding claims, **characterized in that** the undercut (46) points in the direction of the upper profile.

9. Cladding system according to one of the preceding claims, **characterized in that** a panel (7) is held in a sealing manner in the frame of the structural element (1) .

10. Cladding system according to one of the preceding claims, **characterized in that** the upper profile (2) and the lower profile (3) are designed in such a way that they form, towards the weather side, a raintight seal with a lower profile (3) or upper profile (2) of a structurally identical frame of an adjacent structural element (1).

11. Cladding system according to Claim 9 or 10, **characterized in that** the panels (7) of structural elements (1) mounted adjacently in the longitudinal direction and in the lateral direction of the support element lie in one plane.

12. Cladding system of an external surface of a building, in particular of a pitched roof or a façade, **characterized in that** it comprises structural elements (1) and support elements (5) of the cladding system according to one of Claims 1 to 11.

13. Cladding system according to Claim 12, **characterized in that** the structural elements are fitted in such a way that the distances between adjacent structural elements allows a thermal expansion of the structural elements and a demounting of an individual structural element, without demounting one of the adjacent structural elements.

## Revendications

1. Système d'habillage destiné à l'habillage d'une surface extérieure d'un bâtiment, en particulier d'un toit en pente ou d'une façade, avec une pluralité d'éléments structurels se chevauchant (1), comprenant au moins un élément structurel (1) et au moins deux éléments de support (5) pour la fixation amovible de l'au moins un élément structurel (1) sur une construction sous-jacente, l'élément structurel (1) comprenant un cadre qui présente un profilé supérieur (2), un profilé inférieur (3) et deux profilés latéraux (4, 4'), l'élément de support (5) présentant un profilé allongé avec au moins un moyen de retenue (57, 8) et les deux profilés latéraux (4, 4') du cadre présentant chacun, au niveau de leur paroi extérieure, un évidement (45, 65) dans lequel à chaque fois l'un des moyens de retenue (57, 8) peut être engagé pour la fixation amovible de l'élément structurel (1), l'évidement étant ouvert dans la direction opposée au côté exposé aux intempéries, **caractérisé en ce que** l'évidement de l'élément structurel est disposé au niveau d'une extrémité longitudinale inférieure du profilé latéral et **en ce que** l'élément de support présente le long de son axe longitudinal au moins deux moyens de retenue (57, 8) et la distance entre deux moyens de retenues adjacents (57, 8) correspond à la distance entre les profilés supérieurs de deux éléments structurels montés en position adjacente dans la direction longitudinale de l'élément de support.

2. Système d'habillage selon la revendication 1, **caractérisé en ce que** l'élément de support est réalisé sous forme de rigole continue.

3. Système d'habillage selon l'une quelconque des revendications précédentes, **caractérisé en ce que** le moyen de retenue est un boulon (57), une nervure ou un pont qui est disposé(e) transversalement à l'axe longitudinal de l'élément de support (5).

4. Système d'habillage selon l'une quelconque des revendications précédentes, **caractérisé en ce que** le moyen de retenue présente un élément de ressort (8) .

5. Système d'habillage selon l'une quelconque des revendications précédentes, **caractérisé en ce que** le moyen de retenue (57, 8) peut à chaque fois être engagé dans l'évidement (45, 65, 95) des profilés latéraux adjacents (4, 4') de deux éléments structurels latéralement adjacents (1).

6. Système d'habillage selon l'une quelconque des revendications précédentes, **caractérisé en ce que** l'évidement (45, 65) s'élargit obliquement dans la direction opposée au côté exposé aux intempéries.

7. Système d'habillage selon l'une quelconque des revendications précédentes, **caractérisé en ce que** l'évidement (45, 65) présente au moins une contre-dépouille (46, 66) dans laquelle le moyen de retenue (57, 8) peut être engagé.

8. Système d'habillage selon l'une quelconque des revendications précédentes, **caractérisé en ce que** la contre-dépouille (46) est orientée dans la direction du profilé supérieur.

9. Système d'habillage selon l'une quelconque des revendications précédentes, **caractérisé en ce qu'**un panneau (7) est retenu de manière hermétique dans le cadre de l'élément structurel (1).

10. Système d'habillage selon l'une quelconque des revendications précédentes, **caractérisé en ce que** le profilé supérieur (2) et le profilé inférieur (3) sont configurés de telle sorte qu'ils forment, avec un profilé inférieur (3) ou un profilé supérieur (2) d'un cadre de même construction d'un élément structurel adjacent (1), une terminaison imperméable aux précipitations du côté exposé aux intempéries.

11. Système d'habillage selon la revendication 9 ou 10, **caractérisé en ce que** les panneaux (7) d'éléments structurels (1) montés de manière adjacente dans la direction longitudinale et dans la direction latérale de l'élément de support sont situés dans un plan.

12. Habillage d'une surface extérieure d'un bâtiment, en particulier d'un toit oblique d'une façade, **caractérisé en ce qu'**il comprend des éléments structurels (1) et des éléments de support (5) du système d'habillage selon l'une quelconque des revendications 1 à 11.

13. Habillage selon la revendication 12, **caractérisé en ce que** les éléments structurels sont montés de telle sorte que les distances entre des éléments structurels adjacents permet une dilatation thermique des éléments structurels et un démontage d'un élément structurel individuel sans démontage de l'un des éléments structurels adjacents.
